# EUROPEAN PATENT SPECIFICATION

(11) **EP 3 072 717 B1**
(45) Date of publication and mention of the grant of the patent: **23.08.2017**
(21) Application number: 15160544.1
(22) Date of filing: 24.03.2015
(51) Int. Cl.: B60H 1/28, B62D 25/08

(54) **AIR GRID WITH ENHANCED FIXATION MEANS**
LÜFTUNGSGITTER MIT VERBESSERTEN BEFESTIGUNGSMITTELN
GRILLE D'AIR AVEC DES MOYENS DE FIXATION AMÉLIORÉE

(43) Date of publication of application: 28.09.2016
(73) Proprietor: Illinois Tool Works Inc., Glenview, IL 60025 (US)
(72) Inventor: Yon, Fulvio Pacifico, 11020 Donnas (Aosta) (IT); Savi, Massimo, 13900 Biella (IT)
(74) Representative: Liefhold, Christian

(56) References cited:
- DE-U1- 20 121 379
- FR-A1- 2 754 503
- US-A1- 2015 035 318

## Description

This invention relates to air grids for exchanging air through an opening in a wall of a vehicle, for example air grids placed under the wind screen of a vehicle. Such a grid is disclosed in US 2015/0035318 A1. According to the prior art such air grids are fixed with screws or conventional snap-fit systems. Screw fixation needs time for fixation, is expensive, however easy to remove. Snap-fit fixation is easy to fix, cheap but complicate to remove. The inventors found it disadvantageous that the insertion and the possibility to easily release such air grids are not yet optimal. The object of the invention therefore was to enhance such air grids with respect to its fixation means.

This object is achieved by the subject matter of the independent claims; preferred embodiments are specified by the dependent claims.

Particularly, this object is achieved by an air grid for exchanging air through an opening in a wall of a vehicle while impeding the intrusion of objects through the opening, wherein the air grid comprises a snap-fit fixation means for fixing the air grid in the opening, wherein the fixation means comprises at least one hook element comprising a foot portion and a hook portion, the hook portion being resiliently deflectable relative to the foot portion between a fixing position and a release position and the hook element being attached to the air grid via the foot portion on one side of a corner of the air grid, wherein the hook element extends around the corner and the hook portion ends on the other side of the corner.

By this invention, a special snap-in-corner-hook-element is presented. With such a hook element, a very advantageous attachment of the grid at the corners of the opening is achieved as the hook element surrounds the corner. Furthermore, an easy insertion in the area of the corner is achieved. As can be seen in a further preferred embodiment, this hook design is setting the basis for an easy removal of the fixation.

The air grid is preferably inserted in an opening of a wall separating a covered part of the vehicle from the outside. For example, the air grid is placed under the wind screen next to or within the engine hood. The main function is preferably to prevent the intrusion of objects like leaves into the ventilation system of the car.

The air grid preferably comprises a preferably flat frame area having a bottom surface that is surrounding a grid area of the air grid, the grid area having multiple openings for air exchange. Preferably, the bottom surface has a larger outer diameter than the wall opening. Preferably, the bottom surface is a sealing surface, sealing directly or indirectly (by means of a gasket) around the whole against the wall of the vehicle.

A corner is preferably a corner of the bottom surface of the frame area. A corner preferably connects two straight edges (e.g. edges of the frame area parallel to the bottom surface area), which are not collinear, preferably which are angled with respect to each other (e.g. 45°-179° or 90°). The frame area preferably has one or more corners corresponding to the corner(s) of the opening in the wall. Therefore in this case, whenever in this description a corner of the wall opening is referred to, it is possible, to refer instead to the corner of the frame area and vice versa. The corner is preferably a rounded corner, preferably having a constant corner radius. The delimitation between one side and the other side of the corner in case of a rounded corner is preferably on the point half way of the rounded portion. Particularly preferably, the other side of the corner is starting at the point at which the edge is again straight. Particularly preferably, the one side of the corner ends at the point, where the straight edge finishes and passes into the rounded part.

The attachment of the hook element to the air grid is preferably realized by integrally forming the hook element to the air grid, e.g. by manufacturing the air grid as an injection molded part that includes the hook element(s).

Preferably, the foot portion has at least one sub-portion that is starting and ending on the one side of the corner and this is the only connection of the hook portion to the air grid, i.e. the hook portion has no other connection to the air grid than via this sub-portion. For example, the foot portion could extend over the corner from the one side to the other side, but then the foot portion is getting narrower into such a sub-portion and then it extends further to the hook portion, ending on the other side of the corner. Particularly preferably, the complete foot portion starts and ends on the one side of the corner. The foot portion of the hook element is preferably attached to the frame portion. The foot portion preferably protrudes from the air grid, preferably from the bottom surface of the frame and preferably along the direction for inserting the grid into the wall opening. Preferably, when the air grid is fixed within the wall, the foot portion protrudes from one side of the opening into the opening to the other side of the opening.

The hook portion preferably has a shape protruding also outwards the air grid (e.g. parallel to the bottom surface). It preferably has an outward protrusion (serving as a hook) configured to snap-fit within the opening by protruding beyond an outer edge of the opening when the air grid is in fixed position within the opening. The protrusion comes to rest outside of the diameter of the wall opening, when the air grid has been fixed into the wall opening. The outside (with respect to the air grid) contour of the hook portion is preferably tapered, getting thinner towards the distal end of the hook portion to allow for an easy insertion into the wall opening. The protrusion's contour facing the bottom surface of the frame area of the air grid is preferably parallel to the bottom surface or slanted inwards such that the outer end of this surface is closer to the bottom surface than the inner end. The fixing position is the rest position of the hook portion and the release position is a position into which the hook element has to be brought by an external force. Preferably, the hook portion is representing the distal end of the hook element.

The hook element is preferably extending around the corner approximately parallel to the bottom surface of the frame area and preferably with a predetermined distance, preferably free space, between the hook portion and the bottom surface. Preferably, the hook element comprises a transition portion between the hook portion and the foot portion, the transition portion having no protrusion beyond the diameter of the wall opening. The transition portion preferably extends parallel to the bottom face of the frame area.

Preferably the frame area of the air grid is configured to be water-tightly fixed to the wall portion directly adjacent to the wall opening, which is beneficial for preventing water streams running along the wall to enter the opening. Preferably, the grid comprises a gasket (e.g. out of rubber, soft plastic material), being positioned on the bottom face of the frame area facing the wall. The gasket preferably has one or more pins facing the bottom surface of the frame area, the pin preferably being approximately perpendicular to the bottom surface, and the bottom surface has one or more openings adapted to tightly receive the pin(s) - by this, the gasket can be pre-mounted to the air grid advantageously. The opening(s) in the bottom surface preferably has(have) a smaller diameter than the pin(s) of the gasket.

In a further preferred embodiment according to the present invention the hook portion extends over the corner to the other side of the corner.

Hereby, the hook portion has a fixation effect directly on the corner. Preferably, the hook portion starts already at the one side of the corner, e.g. by having at least a small outward protrusion already on the one side of the corner, whereby the fixation effect is present across the corner.

In a further preferred embodiment according to the present invention the hook portion has a convex, preferably rounded, quarter-circular outer shape.

Hereby, the hook portion can be easily inserted into openings having correspondingly concave/rounded/quarter-circular inner corner shapes and furthermore, the fixation effect can be present along the corner shape.

In a further preferred embodiment according to the present invention the hook portion has an outward protrusion configured to snap-fit within the opening by protruding beyond an outer edge of the opening by a protruding amount when the air grid is in fixed position within the opening, wherein the protruding amount is increasing from the one side of the corner to the other side of the corner.

Hereby, both, a good fixation and an easy snap-in and removal is achieved, because in more distal areas of the hook element, which are easier to resiliently deflect, the protrusion amount is higher than in less distal areas.

In a further preferred embodiment according to the present invention the protrusion amount is increasing continuously.

Hereby, the snap-in is particularly easy. For example, such a protrusion with continuously increasing protrusion amount is realized for an opening having a rounded corner with corner radius R, then the protrusion portion has an outer shape having a corner radius bigger than R (within in a cross-section parallel to the bottom surface of the frame area), wherein the corner radius of the hook portion is shifted with respect to the corner radius R (and not concentrically to the corner radius R) such that on the one side of the corner, the protrusion is minimal or zero, and on the other side of the corner it is maximal.

In a further preferred embodiment according to the present invention the hook element comprises
- a recess configured for receiving a release tool being inserted through the air grid and/or,
- a flag element configured for receiving a force by the release tool being inserted through the air grid,
wherein the hook element is resiliently deflectable by the release tool into the release position.

Therefore, by passing through the grid with a tool it is possible to unhook the hook element in an easy way, because of a movement including a rotation component. Preferably, the recess and/or the flag element are present on the other side of the corner, close to or at the distal end of the hook element. Preferably, the recess and/or the flag element are elongated for receiving a flat-blade screw driver. The recess and/or the flag element are preferably located on a surface of the hook portion facing the bottom surface of the frame area of the air grid. The flag element is preferably protruding from this surfing to the direction of the bottom surface of the frame area. Preferably, the protrusion of the hook portion is located outside relative to the recess and/or the flag element.

In a further preferred embodiment according to the present invention the foot portion has a straight outer guiding surface.

Hereby, the hook element has also partly the capability of aligning the air grid within the opening with respect to movements within a plane parallel to the opening. Preferably, the outer guiding surface is present only on the one side of the corner. Preferably, when the air grid is fixed within the wall opening, the outer guiding surface is in touch or only slightly (about 0.01 mm to 3 mm) retracted from the outer edge of the opening. Preferably, the direction of deflection necessary to deflect the hook portion between the fixing position and the release position is exactly or approximately perpendicular to the surface normal of the guiding surface. In this configuration, the guiding surface can be made very stiff (advantageous for a good guiding property) without affecting the resilient flexibility of the hook portion relative the foot portion.

In a further preferred embodiment according to the present invention the air grid comprises one or more guiding elements.

Hereby, an alternative/additional (with respect to the foot portion of the hook element having a guiding surface) fixation of the air grid with respect to movements within a plane parallel to the opening can be advantageously achieved. Preferably, a guiding element has a straight outer guiding surface. When the air grid is fixed within the wall opening, the outer guiding surface is in touch or only slightly (about 0.01 mm - 3 mm) retracted from the outer edge of the opening. Although not necessary, a guiding element may comprise a hook portion comprising a protrusion. Preferably, only the hook elements at the corners have a hook portion and the guiding elements have no hook portion.

In a further preferred embodiment according to the present invention the air grid comprises at least one pair consisting of
- two guiding elements, opposing each other on different sides of the air grid or
- the hook element and another hook element, opposing each other on different sides or corners of the air grid,
   the other hook element comprising a further foot portion and a further hook portion, the further hook portion being resiliently deflectable relative to the further foot portion between a fixing position and a release position and the further hook element being attached to the air grid via the further foot portion on one side of the other corner of the air grid, wherein the other hook element extends around the other corner and the further hook portion ends on the other side of the other corner or
- a guiding element and the hook element, opposing each other on different sides or corners of the air grid.

Hereby, a very advantageous fixation of the air grid with respect to movements within a plane parallel to the opening is achieved. The other hook element may preferably also have any features, which the first mentioned hook element has - i.e. they are preferably of the same type. Opposing each other on different corners is preferably an opposing on diagonally opposing corners. Preferably, the air grid comprises multiple such pairs (e.g. 2 pairs of guiding elements, 1 pair of hook elements; or 3 pairs of guiding elements, 2 pairs of hook elements).

In a further preferred embodiment according to the present invention the air grid is inserted into the opening of the wall of the vehicle.

Embodiments of the present invention will now be described - by way of example only - with reference to the accompanying drawings, whereby
Fig. 1a-1c show an air grid according to the invention,
Fig. 2a-2d show based on the preceding figures, a hook element according to the invention,
Fig. 3a-3c show based on the preceding figures, a hook element according to the invention whereby the aspect of the removability is focused,
Fig. 4 shows a gasket for or of an air grid of the preceding figures,
Fig. 5 shows based on the preceding figures, an air grid being fixed inside an opening of the wall of the vehicle and having further guiding elements.

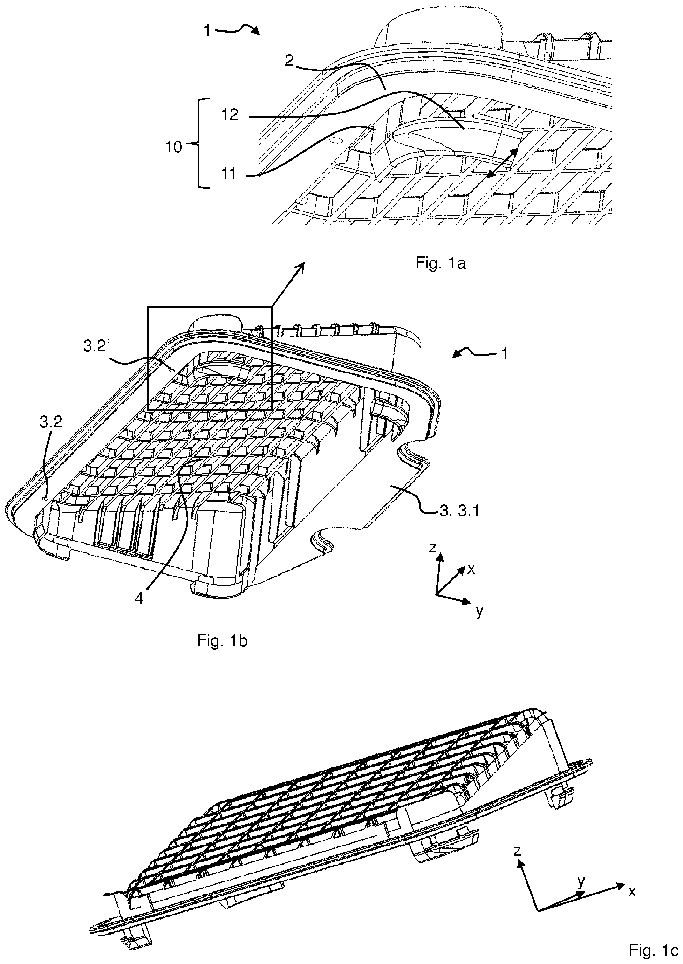

**Fig. 1a-1c** show an air grid 1 according to the invention. The air grid 1 comprises a snap-fit fixation means for fixing the air grid 1 in the opening, wherein the fixation means comprises at least one hook element 10. The hook element 10 comprises a foot portion 11 and a hook portion 12. The hook portion 12 is resiliently deflectable relative to the foot portion 11 between a fixing position and a release position (cf. double-headed arrow).The hook element 10 is attached to the air grid 1 via the foot portion 11 on one side of a corner 2 of the air grid 1. The hook element 10 extends around the corner 2. The hook portion 12 ends on the other side of the corner 2.

In this example, the air grid is rectangular and has on each corner such a hook element 10. Fig. 1b furthermore shows that in this case the air grid 1 has a frame area 3 and a grid area 4 and furthermore openings 3.2, 3.2' for gasket pins within the bottom face 3.1 of the frame area 2.

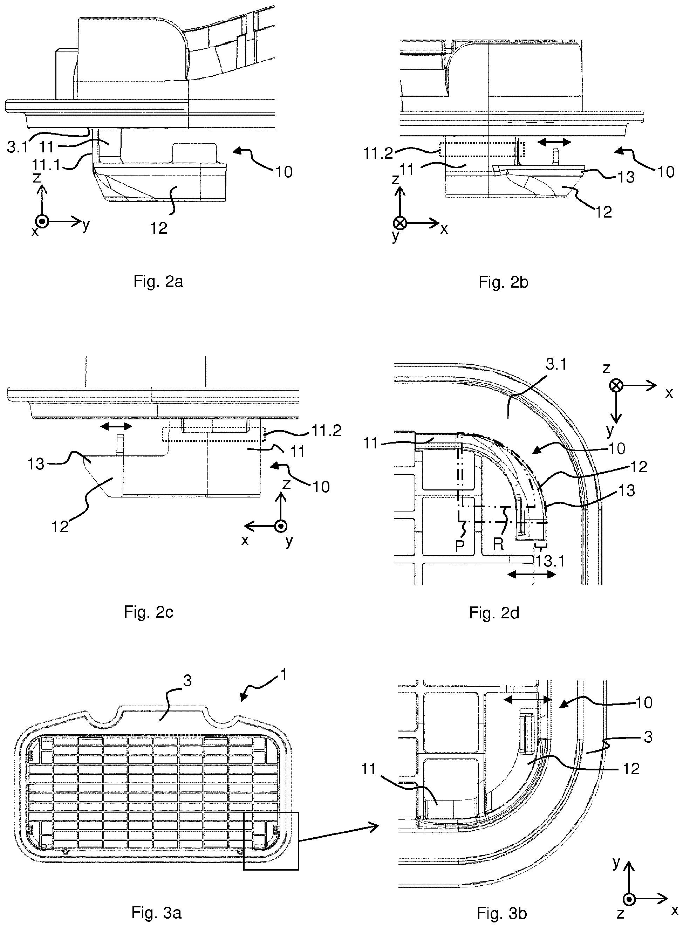

**Fig. 2a-2d** show based on the preceding figures a hook element 10 according to the invention from different perspectives as indicated by the coordinate system information, whereas some of the further preferred features according to the invention are described in connection with these drawings. The hook portion 12 extends over the corner 2 to the other side of the corner 2. The hook portion 12 has a convex, rounded, quarter-circular outer shape. The hook portion 12 has an outward protrusion 13 configured to snap-fit within the wall opening by protruding beyond an outer edge of the wall opening by a protruding amount 13.1 when the air grid 1 is in fixed position within the wall opening, wherein the protruding amount 13.1 is increasing from the one side of the corner 2 to the other side of the corner 2. The protrusion amount 13.1 is increasing continuously. The foot portion 11 has a straight outer guiding surface 11.1.

The attachment of the hook element 10 to the air grid 1 is realized by having manufactured the air grid 1 as an injection molded part that includes the hook element 10. The foot portion 11 has at least one sub-portion 11.2 that is starting and ending on the one side of the corner 2 and the hook portion 12 has no other connection to the air grid 1 than via this sub-portion 11.2. Furthermore the complete foot portion 11 starts and ends on the one side of the corner.

The foot portion 11 of is attached to the frame area 3, more specifically the bottom surface 3.1 of it. The foot portion 11 protrudes from the bottom surface 3.1 of the frame are 3 and along the direction for inserting the grid into the wall opening (negative z-direction).

The hook portion 12 has a shape protruding outwards the air grid 1 (here: parallel to the bottom surface 3.1). It has an outward protrusion 3.1 configured to snap-fit within the opening. The outside (with respect to the air grid) contour of the hook portion 12 is tapered, getting thinner towards the distal end of the hook portion 12 to allow for an easy insertion into the wall opening. The protrusion's contour facing the bottom surface 3.1 of the frame area of the air grid is parallel to the bottom surface 3.1. The hook portion 12 is representing the distal end of the hook element 10. The hook element 10 is extending around the corner parallel to the bottom surface 3.1 of the frame area 3 and at a predetermined distance between the hook portion 12 and the bottom surface 3.1.

The protrusion 13 with continuously increasing protrusion amount 3.1 is realized for an opening having a rounded corner with corner radius R (here it is assumed that the inner edge of the bottom surface 3.1. is corresponding at least qualitatively to the inner edge of the opening), wherein the hook portion 12 has an outer shape having a corner radius P bigger than R (within in a cross-section parallel to the bottom surface of the frame area), wherein the corner radius of the hook portion 12 is shifted with respect to the corner radius R (and not concentrically to the corner radius R) such that on the one side of the corner, the protrusion amount 13.1 is minimal or zero, and on the other side of the corner it is maximal.

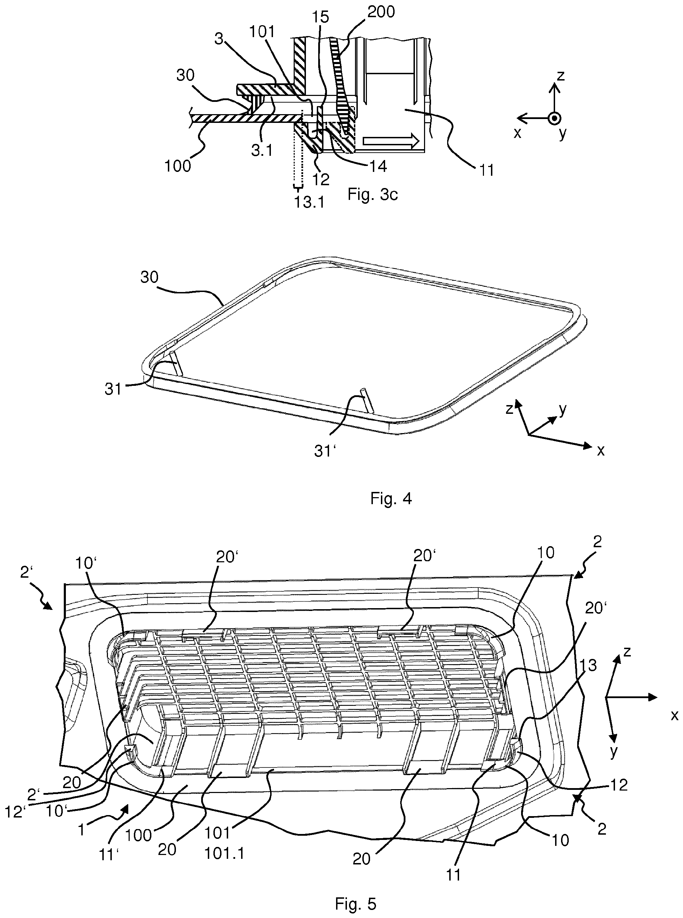

**Fig. 3a-3c** show based on the preceding figures a hook element 10 according to the invention whereby the aspect of the removability is focused. Fig. 3 shows a state inserted into the opening 101 of the wall 100. The hook element 10 comprises a recess 14 configured for receiving a release tool 200 being inserted through the air grid 10 and a flag element 15 configured for receiving a force by the release tool 200 being inserted through the air grid 1. The hook element 10 is resiliently deflectable by the release tool 200 into the release position (shown dashed in Fig. 3c). Furthermore, the air grid 1 comprises a gasket 30 attached between the bottom surface 3.1 and the wall 100.

**Fig. 4** shows a gasket 30 of or for an air grid 1 of the preceding figures. The gasket 30 has pins 31, 31' configured for being inserted into the openings 3.2, 3.2' within the bottom surface 3.1 of the frame area 3 of the air grid 1.

**Fig. 5** shows based on the preceding figures, an air grid 1 being fixed/inserted inside/into an opening 101 of the wall 100 of the vehicle and further having guiding elements 20, 20'. The air grid 1 comprises three pairs consisting of two guiding elements 20, 20', the elements of each pair opposing each other on different sides of the air grid 1. The air grid 1 comprises two pairs of a hook element 10 and another hook element 10', opposing each other on corners 2, 2' of the air grid 1. Each other hook element 10' comprises a further foot portion 11' and a further hook portion 12', the further hook portion 12' being resiliently deflectable relative to the further foot portion 11' between a fixing position and a release position and the further hook element 10' being attached to the air grid 1 via the further foot portion 11' on one side of the other corner 2' of the air grid 1, wherein the other hook element 10' extends around the other corner 2' and the further hook portion 12' ends on the other side of the other corner 2'.

The hook portion 12 has an outward protrusion 13 configured to snap-fit within the opening 101 by protruding beyond an outer edge 101.1 of the opening 101 by a protruding amount when the air grid 1 is in fixed position within the opening 101. When the air grid 1 is fixed within the wall 100, the foot portion 11 protrudes from one side of the opening 101 into the opening 101 to the other side of the opening 101. The protrusion of the hook portion 12 is engaged in snap-fit by protruding beyond an outer edge 101.1 of the opening when the air grid 1 is in fixed position within the opening 101. The protrusion 13 has come to rest, outside of the diameter of the wall opening 101.

With this invention an air grid with a new fixation means has been presented. The new fixation means comprises a snap-fit hook element which extends around a corner of the air grid. By this, especially the corner areas are well fixed. The snap-fit is cheap and easy to fit. Especially if the hook portion of the hook element has a rounded outer shape to fit to rounded corners of the opening, into which the air grid is inserted, the insertion can be performed very smoothly. The special design, by which the deflection of the hook has a rotational component, allows for an easy fixation and removal.

**Reference signs**

| | | | |
|---|---|---|---|
| 1 | air grid | R | corner radius of opening and/or inner edge of bottom surface |
| 2 | corner of the air grid | | |
| 3 | frame area | P | corner radius of outer shape of hook portion |
| 3.1 | bottom surface of the frame area | | |
| 3.2 | opening for gasket pin | | |
| 4 | grid area | | |
| 10 | hook element | | |
| 11 | foot portion | | |
| 11.1 | guiding surface | | |
| 11.1 | sub-portion | | |
| 12 | hook portion | | |
| 13 | protrusion | | |
| 13.1 | protrusion amount | | |
| 14 | recess | | |
| 15 | flag element | | |
| 20 | guiding element | | |
| 30 | gasket | | |
| 31 | pin | | |
| 100 | wall | | |
| 101 | opening | | |
| 101.1 | outer edge of opening | | |
| 200 | release tool | | |

## Claims

1. Air grid (1) for exchanging air through an opening (101) in a wall (100) of a vehicle while impeding the intrusion of objects through the opening, wherein the air grid (1) comprises a snap-fit fixation means for fixing the air grid (1) in the opening, wherein the fixation means comprises at least one hook element (10) comprising a foot portion (11) and a hook portion (12), the hook portion (12) being resiliently deflectable relative to the foot portion (11) between a fixing position and a release position and the hook element (10) being attached to the air grid (1) via the foot portion (11) on one side of a corner (2) of the air grid (1),
**characterized in that,**
the hook element (10) extends around the corner (2) and the hook portion (12) ends on the other side of the corner (2).

2. Air grid (1) according to claim 1, wherein the hook portion (12) extends over the corner (2) to the other side of the corner (2).

3. Air grid (1) according to claim 2, wherein the hook portion (12) has a convex outer shape.

4. Air grid (1) according to claim 3, wherein the hook portion (12) has an outward protrusion (13) configured to snap-fit within the opening (101) by protruding beyond an outer edge (101.1) of the opening (101) by a protruding amount (13.1) when the air grid (1) is in fixed position within the opening (101), wherein the protruding amount (13.1) is increasing from the one side of the corner (2) to the other side of the corner (2).

5. Air grid (1) according to claim 4, wherein the protrusion amount (13.1) is increasing continuously.

6. Air grid (1) according to one of the preceding claims, wherein the hook element (10) comprises
- a recess (14) configured for receiving a release tool (200) being inserted through the air grid (10) and/or,
- a flag element (15) configured for receiving a force by the release tool (200) being inserted through the air grid (1),
wherein hook element (10) is resiliently deflectable by the release tool (200) into the release position.

7. Air grid (1) according to one of the preceding claims, wherein the foot portion (11) has a straight outer guiding surface (11.1).

8. Air grid (1) according to one of the preceding claims, wherein the air grid (1) comprises one or more guiding elements (20, 20').

9. Air grid (1) according to one of the preceding claims, wherein the air grid (1) comprises at least one pair consisting of
- two guiding elements (20, 20'), opposing each other on different sides of the air grid (1) or
- the hook element (10) and another hook element (10'), opposing each other on different sides or corners (2, 2') of the air grid (1),
the other hook element (10') comprising a further foot portion (11') and a further hook portion (12'), the further hook portion (12') being resiliently deflectable relative to the further foot portion (11') between a fixing position and a release position and the further hook element (10') being attached to the air grid (1) via the further foot portion (11') on one side of the other corner (2') of the air grid (1), wherein the other hook element (10') extends around the other corner (2') and the further hook portion (12') ends on the other side of the other corner (2') or
- a guiding element (20) and the hook element (10), opposing each other on different sides or corners (2, 2') of the air grid (1).

10. Air grid (1) according to one of the preceding claims, wherein the air grid (1) is insertable into the opening (101) of a wall (100) of a vehicle.

## Patentansprüche

1. Lüftungsgitter (1) zum Austausch von Luft durch eine Öffnung (101) in einer Wand (100) eines Fahrzeugs unter Verhinderung des Eindringens von Gegenständen durch die Öffnung, wobei das Lüftungsgitter (1) ein Schnappfixierungsmittel zum Fixieren des Lüftungsgitters (1) in der Öffnung umfasst, wobei das Fixierungsmittel mindestens ein Hakenelement (10) umfasst, das einen Fußabschnitt (11) und einen Hakenabschnitt (12) umfasst, wobei der Hakenabschnitt (12) bezüglich des Fußabschnitts (11) zwischen einer Fixierungsposition und einer Löseposition elastisch biegbar ist und das Hakenelement (10) über den Fußabschnitt (11) an einer Seite einer Ecke (2) des Lüftungsgitters (1) an dem Lüftungsgitter (1) angebracht ist,
**dadurch gekennzeichnet, dass**
sich das Hakenelement (10) um die Ecke (2) herum erstreckt und der Hakenabschnitt (12) an der anderen Seite der Ecke (2) endet.

2. Lüftungsgitter (1) nach Anspruch 1, wobei sich der Hakenabschnitt (12) über die Ecke (2) zu der anderen Seite der Ecke (2) erstreckt.

3. Lüftungsgitter (1) nach Anspruch 2, wobei der Hakenabschnitt (12) eine konvexe äußere Form aufweist.

4. Lüftungsgitter (1) nach Anspruch 3, wobei der Hakenabschnitt (12) einen nach außen verlaufenden Vorsprung (13) aufweist, der zur Schnappverbindung in der Öffnung (101) durch Vorragen über einen äußeren Rand (101.1) der Öffnung (101) um ein Vorragungsausmaß (13.1), wenn sich das Lüftungsgitter (1) in der fixierten Position in der Öffnung (101) befindet, konfiguriert ist, wobei das Vorragungsausmaß (13.1) von der einen Seite der Ecke (2) zu der anderen Seite der Ecke (2) zunimmt.

5. Lüftungsgitter (1) nach Anspruch 4, wobei das Vorragungsausmaß (13.1) stetig zunimmt.

6. Lüftungsgitter (1) nach einem der vorhergehenden Ansprüche, wobei das Hakenelement (10) Folgendes umfasst:
- eine Vertiefung (14), die zur Aufnahme eines Lösewerkzeugs (200) konfiguriert ist, das durch das Lüftungsgitter (10) eingeführt wird, und/oder
- ein Flag-Element (15), das zur Aufnahme einer durch das Einführen des Lösewerkzeugs (200) durch das Lüftungsgitter (1) verursachten Kraft konfiguriert ist,
wobei das Hakenelement (10) durch das Lösewerkzeug (200) elastisch in die Löseposition biegbar ist.

7. Lüftungsgitter (1) nach einem der vorhergehenden Ansprüche, wobei der Fußabschnitt (11) eine gerade äußere Führungsfläche (11.1) aufweist.

8. Lüftungsgitter (1) nach einem der vorhergehenden Ansprüche, wobei das Lüftungsgitter (1) ein oder mehrere Führungselemente (20, 20') umfasst.

9. Lüftungsgitter (1) nach einem der vorhergehenden Ansprüche, wobei das Lüftungsgitter (1) mindestens ein Paar umfasst, das aus Folgendem besteht:
- zwei Führungselementen (20, 20'), die einander an verschiedenen Seiten des Lüftungsgitters (1) gegenüberliegen, oder
- dem Hakenelement (10) und einem anderen Hakenelement (10'), die einander an verschiedenen Seiten oder Ecken (2, 2') des Lüftungsgitters (1) gegenüberliegen,
wobei das andere Hakenelement (10') einen weiteren Fußabschnitt (11') und einen weiteren Hakenabschnitt (12') umfasst, wobei der weitere Hakenabschnitt (12') bezüglich des weiteren Fußabschnitts (11') zwischen einer Fixierungsposition und einer Löseposition elastisch biegbar ist und das weitere Hakenelement (10') über den weiteren Fußabschnitt (11') an einer Seite der anderen Ecke (2') des Lüftungsgitters (1) an dem Lüftungsgitter (1) angebracht ist, wobei sich das andere Hakenelement (10') um die andere Ecke (2') herum erstreckt und der weitere Hakenabschnitt (12') an der anderen Seite der anderen Ecke (2') endet, oder
- einem Führungselement (20) und dem Hakenelement (10), die einander an verschiedenen Seiten oder Ecken (2, 2') des Lüftungsgitters (1) gegenüberliegen.

10. Lüftungsgitter (1) nach einem der vorhergehenden Ansprüche, wobei das Lüftungsgitter (1) in die Öffnung (101) einer Wand (100) eines Fahrzeugs einführbar ist.

## Revendications

1. Grille d'aération (1) permettant un échange d'air à travers une ouverture (101) dans une paroi (100) d'un véhicule tout en empêchant la pénétration d'objets à travers l'ouverture, la grille d'aération (1) comprenant un moyen de fixation par emboîtement élastique permettant de fixer la grille d'aération (1) dans l'ouverture, le moyen de fixation comprenant au moins un élément formant crochet (10) comprenant une partie pied (11) et une partie crochet (12), la partie crochet (12) pouvant être fléchie de manière élastique par rapport à la partie pied (11) entre une position de fixation et une position de libération et l'élément formant crochet (10) étant fixé à la grille d'aération (1) par le biais de la partie pied (11) d'un côté d'un angle (2) de la grille d'aération (1),
**caractérisée en ce que**
l'élément formant crochet (10) s'étend autour de l'angle (2) et la partie crochet (12) se termine de l'autre côté de l'angle (2).

2. Grille d'aération (1) selon la revendication 1, dans laquelle la partie crochet (12) s'étend autour de l'angle (2) jusqu'à l'autre côté de l'angle (2).

3. Grille d'aération (1) selon la revendication 2, dans laquelle la partie crochet (12) présente une forme extérieure convexe.

4. Grille d'aération (1) selon la revendication 3, dans laquelle la partie crochet (12) comporte une saillie extérieure (13) configurée pour s'emboîter de manière élastique à l'intérieur de l'ouverture (101) en faisant saillie au-delà d'un bord extérieur (101.1) de l'ouverture (101) sur une certaine distance de saillie (13.1) lorsque la grille d'aération (1) se trouve en position fixe à l'intérieur de l'ouverture (101), dans laquelle la distance de saillie (13.1) augmente d'un côté de l'angle (2) à l'autre côté de l'angle (2).

5. Grille d'aération (1) selon la revendication 4, dans laquelle la distance de saillie (13.1) augmente de manière continue.

6. Grille d'aération (1) selon l'une des revendications précédentes, dans laquelle l'élément formant crochet (10) comprend :
- un évidement (14) configuré pour recevoir un outil de libération (200) inséré à travers la grille d'aération (10) et/ou
- un élément formant ailette (15) configuré pour recevoir une force appliquée par l'outil de libération (200) inséré à travers la grille d'aération (1),
dans laquelle l'élément formant crochet (10) peut être fléchi de manière élastique par l'outil de libération (200) de sorte qu'il adopte la position de libération.

7. Grille d'aération (1) selon l'une des revendications précédentes, dans laquelle la partie pied (11) comporte une surface de guidage extérieure rectiligne (11.1).

8. Grille d'aération (1) selon l'une des revendications précédentes, la grille d'aération (1) comprenant un ou plusieurs éléments de guidage (20, 20').

9. Grille d'aération (1) selon l'une des revendications précédentes, la grille d'aération (1) comprenant au moins une paire constituée de
- deux éléments de guidage (20, 20'), opposés l'un à l'autre sur des côtés différents de la grille d'aération (1) ou
- l'élément formant crochet (10) et un autre élément formant crochet (10'), opposés l'un à l'autre sur des côtés ou des angles différents (2, 2') de la grille d'aération (1),
l'autre élément formant crochet (10') comprenant une autre partie pied (11') et une autre partie crochet (12'), l'autre partie crochet (12') pouvant être fléchie de manière élastique par rapport à l'autre partie pied (11') entre une position de fixation et une position de libération et l'autre élément formant crochet (10') étant fixé à la grille d'aération (1) par le biais de l'autre partie pied (11') d'un côté de l'autre angle (2') de la grille d'aération (1), l'autre élément formant crochet (10') s'étendant autour de l'autre angle (2') et l'autre partie crochet (12') se terminant de l'autre côté de l'autre angle (2') ou
- un élément de guidage (20) et l'élément formant crochet (10), opposés l'un à l'autre sur des côtés ou des angles différents (2, 2') de la grille d'aération (1).

10. Grille d'aération (1) selon l'une des revendications précédentes, la grille d'aération (1) pouvant être insérée dans l'ouverture (101) d'une paroi (100) d'un véhicule.
